# EUROPEAN PATENT APPLICATION

(11) **EP 2 495 021 A1**
(43) Date of publication of application: **05.09.2012**
(21) Application number: 11189030.7
(22) Date of filing: 14.11.2011
(51) Int. Cl.: A63F 13/10

(54) **Artificial intelligence for games**

(30) Priority: 20.12.2010 JP 2010283389
(71) Applicant: Kabushiki Kaisha Square Enix (also trading as Square Enix Co., Ltd.), Tokyo 151-8544 (JP)
(72) Inventor: Speed, Erek, Shibuya-ku, Tokyo 151-8544 (JP)
(74) Representative: Pitchford, James Edward

(57) **Abstract**

A program for platform games using AI and make a computer to act including steps of: deciding a solution for platform game includes: initializing solutions (S101), selecting an initial solution and a new solution (S102), a first comparison of fitness score (S103); generating a current solution (S104); repeating generating another new solution and comparing fitness scores (S105); and replacing a state (S106).

## Description

### [Technical Field]

The present invention relates to a program of artificial intelligence for platform games.

### [Background Art]

The use of AI for playing various board games such as "chess" and "go" is widespread. These areas of research are similar to action games in that they provide their own interesting problem spaces to explore. As such, the algorithms used tend to be quite domain specific. Similarly, several recent papers deal with modern games such as racing and Pac Man, but the same caveats apply. AI for other platform games would be interesting but almost no work in this area has been done.

Interestingly, even though a platform game, like Super Mario Bros., has experienced enormous popularity, platform games have not been the target of much AI research. Possible reasons for this have been given elsewhere, including the fact that the non-adversarial nature of the game makes character AI unnecessary (See non patent document 1).

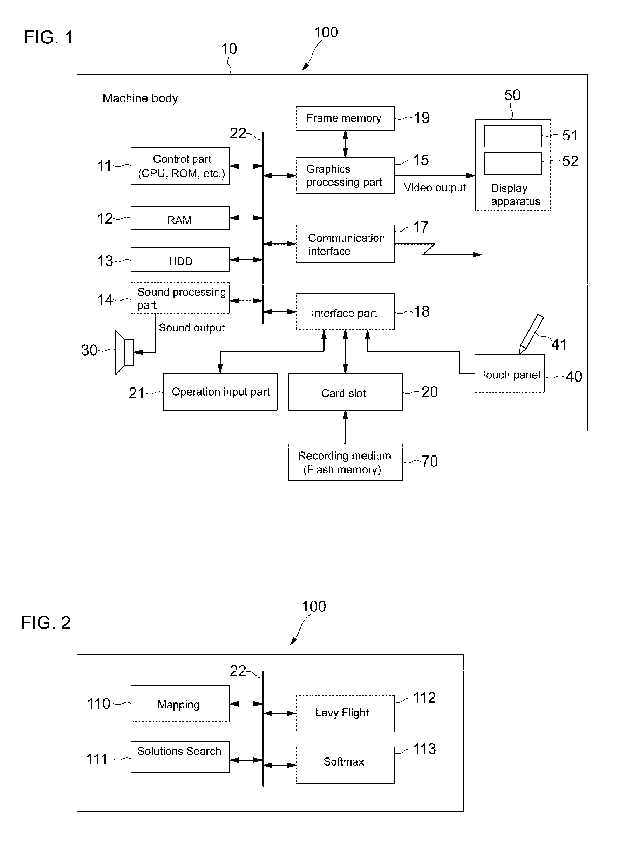

WO2009-120601A1 discloses "COMBINING SPECULATIVE PHYSICS MODELING WITH GOAL-BASED ARTIFICIAL INTELLIGENCE". The document discloses "goal-oriented AI" for games and Figure 1A and 1B of the document disclose the map that has several states and actions.

### [Prior Art documents]

### [Patent Document]

[Patent Document 1] WO2009-120601A1

### [Non Patent Document]

[Non Patent Document 1] J. Togelius, S. Karakovskiy, J. Koutnik, and J. Schmidhuber, "Super mario evolution," in Proc. IEEE Symp. Computational Intelligence and Games CIG 2009, 2009, pp. 156-161.

### [Summary of the Invention]

### [Problem to be solved by the Invention]

It is an obj ect of the present invention to provide a game AI program which is suit for a platform game.

It is another object of the present invention to provide a game AI program which can attain high performance in platform games.

### [Means for solving the problem]

The present invention fundamentally based on a recently introduced search algorithm. The algorithm is especially well suited toward searching such large spaces in a platform games, especially when it employs the use of Levy flights. Unfortunately, these Levy flights cannot be applied to non numerical problems such as platform game. Thus preferred embodiment of the present invention introduce mapping. Mapping the levy flight from a number to an arbitrary change in solution which is composes of a status. With such a mapping it can then be used for any platform games which include a set of states. To further optimize the search of platform game space, a softmax heuristic is presented to focus on areas with likely solutions.

The first aspect of the invention relates to a program for artificial intelligence for platform games. The program may make a computer to perform following steps. The program may make a computer to initialize solutions. Solution comprises one or a plurality of states of a character. One state is linked with another state via one action of the character. The example is start, move right, move right, jump, move right and fire. Initialization may be performed with at random. Namely, one or a plurality of actions may be selected at random. Then because following state is decided by an action, solutions may be decided with using information of actions. Preferred embodiment of the present invention is that the initialization is executed by means of softmax heuristics engine or algorithm.

Then the computer selects an initial solution and a new solution. The initial solution may be selected at random from the solutions initialized the above or nothing. For example, the initial solution is start, move right, move right, jump, move right and fire. The new solution is start, and jump.

The computer then compares fitness score of the initial solution and fitness score of the new solution. The fitness score may be calculated by means of already known engine or algorithm. Then the computer generates a current solution. The current solution is the initial solution when the fitness score of the initial solution is the same as or higher than that of the new solution. The current solution is the new solution when the fitness score of the new solution is higher than that of the initial solution. After the comparison non selected solution may be discarded.

The computer repeats generating another new solution and comparing fitness scores of the current solution and another new solution to generate a revised current solution.

Solutions with many bad states will be bad solutions, and with probability p will be replaced during the iteration of the above algorithm. Bad state may include death of the character. The computer may compare fitness scores of solutions, which may include the initial solution and generated solutions, such that the solution that has the worst fitness score is replaced with predetermined probability with a newly selected solution selected at random from the candidates of solution. Because the algorithm removes the worst solutions while keeping the best solutions, the solution becomes better. The random selections are performed with Levy flight algorism using numbers that correspond to the states.

These Lévy distributions decrease according to the power law 1/(x^{1+γ}) for large x values, where γlies between 0 and 2. Since Gaussians correspond to γ= 2, Brownian motion can be regarded as an extreme case of Lévy motion. Compared to Gaussian distributions, Lévy distributions do not fall off as rapidly at long distances. For Brownian motion, each jump is usually small and the variance of the distribution, <x²>, is finite. For Lévy motion, however, the small jumps are interspersed with longer jumps, or "flights", causing the variance of the distribution to diverge. As a consequence, Lévy jumps do not have a characteristic length scale. Thus the levy flight is suitable for an AI algorithm for platform games because the space of the platform games is so huge.

### [Technical Effect of the Invention]

The present invention can provide a game AI program which is suitable for a platform game.

The present invention can provide a game AI program which can attain high performance in platform games.

### [Brief Description of Drawings]

[Figure 1] Figure 1 is a block diagram that illustrates an example of a configuration of a game apparatus 100 according to one embodiment of the present invention.
[Figure 2] Figure 2 depicts a conceptual block diagram of the computer in which the program of the present invention is implemented.
[Figure 3] Figure 3 is an example of the conceptual map.
[Figure 4] Figure 4 is an example of the conceptual map of solutions.
[Figure 5] Figure 5 depicts a flow chart of attained by the program of the present invention.
[Figure 6] Figure 6 depicts a set of state-action pairs that represents a solution.
[Figure 7] Figure 7 explains small and large changes to a number and a solution to a TSP.
[Figure 8] Figure 8 depicts an example of a possible Levy mutation applied to figure 6

### [Best mode for carrying out the Invention]

The first aspect of the present invention relates to a program for game, especially AI program for platform games. The program may be implemented in a computer. The example of the computer is a game apparatus such as Play Station (trademark), Nintendo DS (trademark) and Nintendo Wii (trademark). The program may cause a computer to act in accordance with orders from the program.

Platform game (or a platformer) is a video game genre. In the platform game, one or a plurality of characters move, get score and reach one or a plurality of goals. The examples of platform games are Super Mario Brothers (Trademark).

The present invention relates to an AI program for platform game. Thus a computer may implement a program for such a platform game and the program of the present invention may use the already implemented game programs. Namely, the computer may comprise a memory that stores information on a platform game including a character, enemies, surroundings, maps, actions and so on.

Hereinafter, one embodiment of the present invention will be described with reference to figures. Figure 1 is a block diagram that illustrates an example of a configuration of a game apparatus 100 according to one embodiment of the present invention. The game apparatus 100 is provided with a portable body 10 on which each element of the apparatus is mounted.

The surface part of the machine body 10 has a display 50 and an operation input part 21. The display 50 has a plurality of image display parts, an upper image display part 51 and a lower image display part 52. The operation input part 21 is composed of switches and keys such as a power switch and a cross key.

The circuit placed in the machine body 10 includes a control part 11, a RAM 12, a hard disc drive (HDD) 13, a sound processing part 14, a graphics processing part 15, a communication interface 17, an interface part 18, a frame memory 19, and a card slot 20. The control part 11, the RAM 12, the hard disc drive (HDD) 13, the sound processing part 14, the graphics processing part 15, the communication interface 17, and the interface part 18 are each connected to an internal bus 22.

The control part 11, including a CPU, a ROM, etc., controls the entire game apparatus 100 in accordance with the control program stored in the HDD 13 or a recording medium 70. The control device 11 is provided with an internal timer which is used, for example, to generate timer interrupts. The RAM 12 is also used as a working area for the control part 11.

The sound processing part 14, provided with a sound input/output interface function that performs D/A and A/D conversion of sound signals, is connected to a sound output apparatus 30 composed, for example, of a speaker. The sound processing part 14 outputs sound signals to the sound output apparatus 30 in accordance with the sound output instructions from the control part 11 that executes processes in accordance with various control programs.

The graphics processing part 15 is connected to the display 50 that has the upper image display part 51 and the lower image display part 52. The graphics processing part 15 distributes images to the frame memory 19 in accordance with the drawing instructions from the control part 11 and also outputs video signals that display the images on the upper and lower image display parts 51 and 52 to the display 50. The switching time for the images displayed according to the video signals is set to 1/30 seconds per frame, for example.

The recording medium 70 stored with programs etc. is inserted into the card slot 20. The recording medium 70 in the present embodiment is a semiconductor memory such as a writable flash memory. The communication interface 17 is connectable to another game apparatus 100 wired or wirelessly, and also is connectable to a communication network such as the Internet. The machine body 10 can communicate with another game apparatus 100 using the communication function of the communication interface 17.

The operation input part 21, the card slot 20 and a touch panel 40 are connected to the interface part 18. The interface part 18 stores, on the RAM 12, the instruction data from the operation input part 21 based on the player's (user's) operation and the instruction data based on the player's operation of the touch panel 40 using a touch pen 41 etc. Then, the control unit 11 executes various arithmetic processing in accordance with the instruction data stored in the RAM 12.

The touch panel 40 is stacked on the display screen(s) of both or either of the upper and lower image display parts 51 and 52. Therefore, the control part 11 recognizes input information depending on the operation inputs by a player, by managing/controlling the timing of display of both or either of the upper and lower image display parts 51 and 52 where the touch panel 40 is stacked, and the timing and position coordinates of operation of the touch panel 40 using the touch pen 41 etc.. The display 50 may be configured with a display screen having a single image display part instead of having a plurality of image display parts such as the upper and lower image display parts 51 and 52.

The interface part 18 executes the processes, in accordance with the instructions from the control part 11, such as storing the data that shows the progress of the game stored in the RAM 12 in the recording medium 70 which is inserted into the card slot 20, or reading out the game data at the time of interruption stored in the recording medium 70 and transferring the data to the RAM 12.

Various data such as a control program for playing a game on the game apparatus 100 is stored in the recording medium 70. The various data such as a control program stored in the recording medium 70 is read out by the control part 11 through the card slot 20 where the recording medium 70 is inserted and is loaded into the RAM 12.

The control part 11 executes various processes, in accordance with the control program loaded into the RAM 12, such as outputting drawing instructions to the graphics processing part 15, or outputting sound output instructions to the sound processing part 14. While the control part 11 is executing the processing, the data occurring intermediately depending on the game progress is stored in the RAM 12 used as a working memory.

Figure 2 depicts a conceptual block diagram of the computer in which the program of the present invention is implemented. The game apparatus 100 comprises a mapping means 110, a solutions search means 111, a levy flight means 112, and softmax means 113. Each means may be implemented by the program and hardware of the game apparatus.

The computer (or a game apparatus) may produce a conceptual map which depicts relationship with states and actions. Because the program of the present invention is for platform games, one state relates to anther state of a main character through one action. The main character, like Mario, may be controlled by a player in a platform game in a normal mode. In the present scheme, the actions of the main character, an AI character, are calculated by the present algorithm. A series of actions of the main character, i.e., a series of states of the AI character, is a solution of a game AI for platform games.

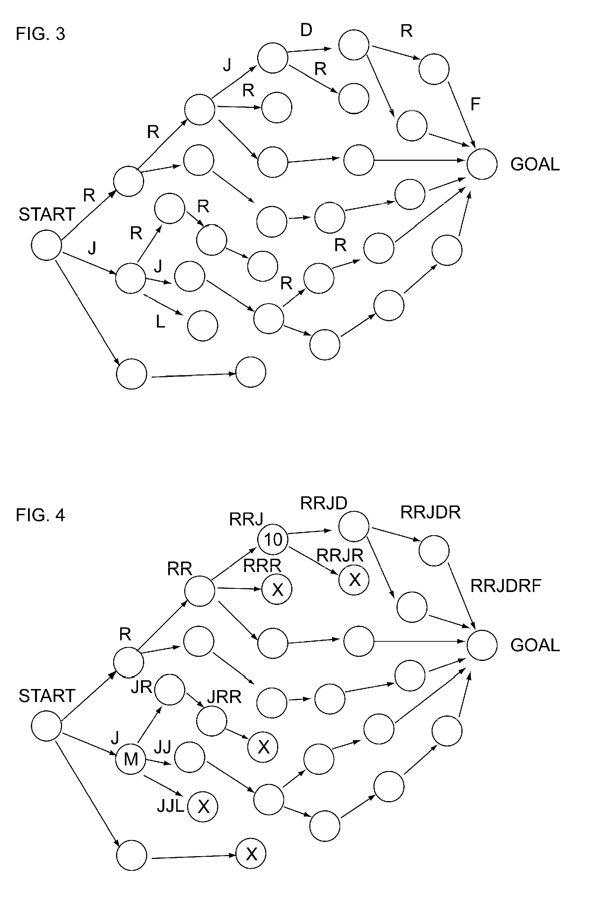

Figure 3 is an example of the conceptual map. In the figure 3, the nodes are states in which the AI character can be and the edges are the actions it can take. The actions may include "jump", "move left" and "move right", which are represented by "J", "L", and "R", respectively. For Super Mario Brothers (Trademark) the action may further include "fire/move fast" and "duck", which are represented by "F" and "D". As shown in figure 3, the map contains a plurality of nodes which each can define a state in which the AI character is. All of the states are linked with other states by actions. The present AI algorithm can calculate a best solution to the goal. The solution may comprise several actions and several states.

For example, the mapping means 110, which may be attained by the program and the hardware of computer, may produce the map. The preferred embodiment of the present invention may use the softmax means 113, which comprises already known softmax program or which can realize the softmax algorithm. The detailed of the softmax program is explained at the Example section herein. Softmax program is commercially available and the Softmax squashing is described in.e.g., J. S. Bridle, "Probabilistic interpretation of feed-forward classification network outputs, with relationships to statistical pattern recognition", F. Fogelman Soulid and J. Herault, editors, Neurocamputing: Algorithms, Architectures and Applications, pages 227-236, NATO ASI Series.

Figure 4 is an example of the conceptual map of solutions. Each node of the map corresponds to a solution. The X in a circle means a failure state, e.g., a AI character is dead. The 10 in a circle means to get point.

The means 110 may read states from the memory that stores information of actions. The means 110 may read actions from the memory and can calculate a next state using the information of the initial state and a read action. The sequence of action to reach the goal may be a solution. Namely, a solution may be a set of states.

The initial solution may be selected at random from the calculated solutions. After the initial solution is selected, e.g. the mapping means 110 may calculate candidates of solution. In executing the process, the mapping means 110 may read one or plurality of actions from the memory and calculate the following solutions. The following solutions become candidates of solutions.

The solution search means 111 may pick up a new solution from the candidates of solutions. Then the means 111 may compare fitness score of the initial solution and fitness score of the new solution. The means for calculating the fitness score has already known in the art. Thus the present invention may comprise already known algorithm to calculate the fitness score. For example, a solution which includes a bad state may get a low score. The example of the bad state is death or fail. Another factor of the fitness score may be a required time for reaching the goal. If one solution requires more time than other then the fitness score of the solution may be low. The example of calculating fitness score is disclosed in the patent document 1. After the solution search means 111 calculates the fitness score, it may store the score of solution in the memory. In comparing the fitness scores, the means 111 may read the stored fitness scores from the memory and then the means 111 may compare the scores.

The solution search means 111 may decide a current solution based on the result of the comparison. If the fitness score of the initial solution is the same as or higher than that of the new solution, the means 111 may select the initial solution as the current solution. Contrary, if the fitness score of the initial solution is lower than that of the new solution, the means 111 may select the new solution as the current solution.

The solution search means 111 then pick up another new solution. In selecting the new solution and another new solution, the preferred embodiment of the present invention may use a concept of levy flight. Such a selection may be executed by using levy flight engine. The levy flight engine may select the solution at random using levy flight algorithm. In selecting the solution the engine allots numbers to the solutions and selects the solution using the allotted number. The solution search means 111 may repeat generating another new solution and a step of comparing fitness scores. Then the solution search means 111 decide a revised current solution. The solution that has the worst score is discarded and is replaced, with predetermined probability, with a newly selected solution selected at random from the candidates of solutions.

The above explanation is based on a program. The present invention may be a computer readable medium, such as a CD-ROM, DVD, FD, MO, SD-Card, USB, Hard Disk or a memory, which comprises the above mentioned program. The present invention may be a game apparatus or a computer which includes the above mentioned program or which can attain the above described steps.

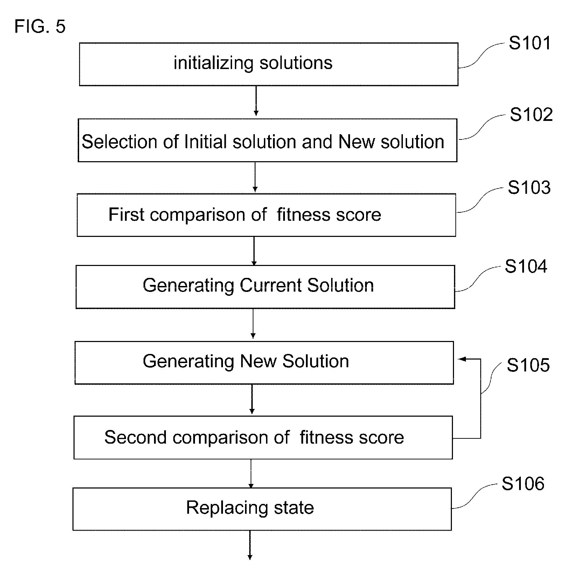

Figure 5 depicts a flow chart of attained by the program of the present invention. As shown in the figure 5, the method for deciding a solution for platform game includes: initializing solutions (S101), selecting an initial solution and a new solution (S102), a first comparison of fitness score (S103); generating a current solution (S104); repeating generating another new solution and comparing fitness scores (S105); and replacing a state (S106). The method may further comprise a step of discarding non selected solutions and replace the solution that has worst fitness score.

In initializing solutions step (S101), the computer calculates each of solutions containing one or a plurality of states of a character as depict in figure 4.

In selecting an initial solution and a new solution step (S102), the computer may select an initial solution and a new solution. Both of the solution may be selected form the initialized solutions. The initial solution may nothing. In this case, the new solution may be selected as a current solution. The computer may compute the fitness score of the initial solution and the new solution.

In the first comparing fitness score step (S103), the computer compares fitness score of the initial solution and fitness score of the new solution. The fitness scores may be calculated by means of a conventional engine and may be stored at the memory of the computer. The fitness scores may be read from the memory to attain the comparison.

In generating a current solution step (S104), the computer generates a current solution. The states that has higher score becomes the current solution.

In repeating generating another new solution and comparing fitness scores step (S105), the computer repeats a step of generating another new solution and a step of comparing fitness scores of the current solution and the another new solution to generate a revised current solution

In the replacing a state step (S106), the computer compares fitness scores of solutions, including the initial solution and generated solutions, such that the solution that has the worst score is replaced with predetermined probability with a newly selected solution selected at random from the candidates of solution. The step S106 may be executed in each end of step S105 and then the state that has low fitness score may be replaced with another state at random. The selection may be controlled by the levy flight engine.

### [Example 1]

For the generation which grew up playing Super Mario Bros.(trademark), the game represents the epitome of the platform genre. Even with a simple goal and basic controls, the game has supplied countless of hours of entertainment as people tried to figure out the various traps and treasures of the Mushroom Kingdom.

Thus the following examples are explained based on the Super Mario Brothers (trademark) but the invention is not limited to the AI algorithm for Super Mario Bros. (trademark).

The current work is based on several diverse areas of previous work. The closest examples are those works which also explore the AI for the purpose of playing Super Mario Bros. A bit further away is AI meant to play other games, especially those which are evolutionary.

In the truest sense, Mario's state at any given moment of time is completely dictated by the MarioAI Benchmark. When implementing an AI, however, there is much choice in how much and what aspects of that state are represented in the algorithm of choice. By default, the MarioAI Benchmark provides a 22 by 22 grid of tiles centered around the Mario sprite.

The above gird is an example and may be different.

Every grid cell contains information about anything relevant existing at its respective location. Enemies, ground, blocks, power ups and Mario himself are examples of the information contained in the grid. Even though this information is a good representation of the state, we introduce two additional factors which provide a finer look at the problem space. First, we include the time remaining to complete the level when any specific grid is observed. Secondly, we include the direction Mario is facing when the grid is observed. Thus, the entire state representation consists of the grid of screen information augmented with time and direction.

### Solution Representation

The solution representation is arguably the most important part of an optimization algorithm and there are no constraints in the framework on how a solution might be represented. Our representation is a mapping of states, described above, to actions.

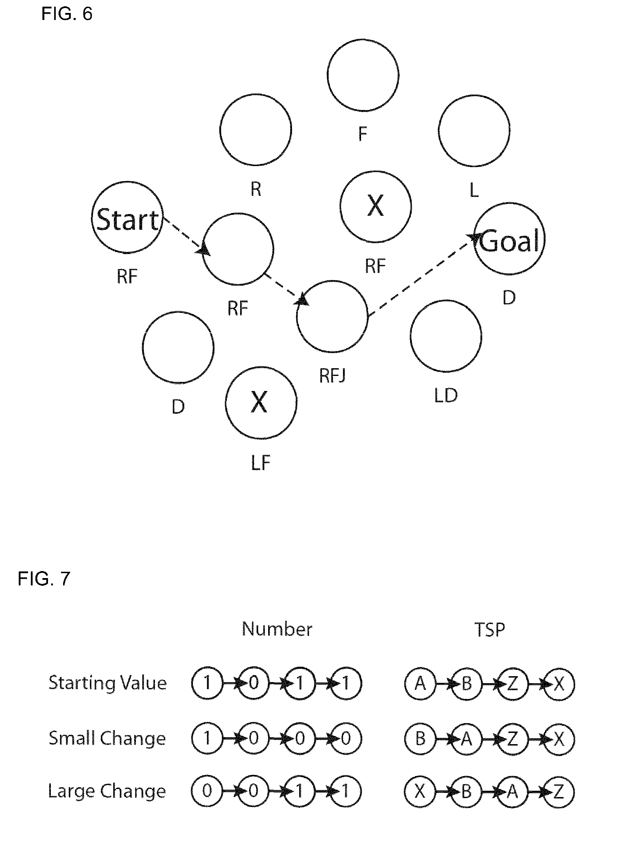

The action space for Super Mario Bros. consist of the following combinable actions: 1) move left; 2) move right; 3) duck; 4) jump; 5) fireball/move faster. The solution representation does contain any explicit link between states. However, there is an implicit chain formed by the determinism of a single level. If Mario is on a state "*a*" and performs action "*x*" then he will always move to state "*a*"'. This form of representation is one reason that the algorithm in its present form doesn't generalize: the AI depends upon this implicit chain which does not exist outside the current level it's training on. A set of these state-action pairs represents a solution (Figure 6).

In the figure 6, an arbitrary collection of Mario states represented as circles. The letters under the circles represent the action associated with each state where the letters correspond to the starting letters of the actions given in the above section. The dotted line between states represents the implicit chain formed between states only as Mario travels between them. The chain also shows a successful solution. An 'X' in a state means death.

### Initializing the Solution

Similar to other evolutionary algorithms, we start with a process to initialize solutions to some possibly random value. However, as we only visit a small set of the possible screens in any given solution, it would be a waste of resources to try to initialize them all (it would also be intractable). Instead we lazily initialize by starting with an empty solution, and as the AI explores a level, the first time he sees a screen it is initialized to some the appropriate value. In this way, we get the initialization properties we want with no waste.

### CUCKOO SEARCH

Cuckoo Search is the newest of many other examples of learning algorithms which are based upon examples from nature. A full description is found elsewhere [X.-S. Yang and S. Deb, "Cuckoo search via Levy flights," in Proc. World Congress Nature & Biologically Inspired Computing NaBIC 2009, 2009, pp. 210-214.], but for the present work, we will explain the essence of the algorithm in order that the reader can follow along for the rest of the paper. The best example of this is a cannon just outside the grid. Often, the AI will wait for it to fire even though it should have no knowledge of it.

The algorithm is based upon the behavior of certain species of Cuckoo which lay their eggs in the nests of other birds in a parasitic manner. If the properties of the egg laying has developed well enough then the eggs will survive and take over the nest upon hatching. Otherwise, the egg will be destroyed by the host mother. This process of evolving to best lay parasitic eggs is the essence of cuckoo search.

### Description of Algorithm

For a given optimization problem, a solution is represented by a nest (with egg). The basic algorithm calls for our random initialization of solutions. In each iteration step, two operations are performed. First, a new nest is generated by performing a random walk from some current nest which is then evaluated. In practice, this nest will be the current best nest. In order to decide whether to keep this new nest, a random, already existing, nest is chosen and their fatnesses are compared. The better nest is kept and the worse nest is discarded. In the second part of the algorithm, the worst nests are removed with some probability *p* and replaced with random nests. This is equivalent to saying that with some probability *p* the worst parasitic eggs are discovered.

### Levy Flights

The core part of the algorithm described above can be done as described without Levy flights (i.e., with regular Brownian motion) but such a version is not considered optimal. Motion based on Levy flights is able to search large areas very quickly due to the heavy tailed nature of the Levy distribution. Thus, when exploring the area around a given solution, the search will mostly stay local, but occasionally will move a great distance, thus helping explore the space at a faster rate. Considering the huge search space that Mario presents, this type of behavior should be beneficial. A full explanation of this usage of Levy flight is explained in the original work.

### Parameter Tuning

One specific feature of cuckoo search which is highly lauded is its lack of parameters. A common complaint with an algorithm like the genetic algorithm is that there are many parameters which must be tuned carefully to provide the best results. Cuckoo search can be said to only have a single parameter besides population size: the probability an egg is discovered. Even considering the parameters for the Levy distribution, this is far less than the common genetic algorithm. Additionally, at least in a set of specific examples, the parameters are considerably insensitive which allows for more error in any tuning that does occur. When applying the algorithm to the Mario problem space it was unknown whether this insensitivity would hold. From experimentation, it appears that it's true to a certain extent, though the sensitivity of the parameters is not a focus of this work. Population size was varied from 15 to 30 nests with little change in the results while the relevant probability was independently varied from .2 to .5 with little change.

### APPLYING "CUCKOO SEARCH WITH LEVY FLIGHTS" TO MARIO

In the initial work on cuckoo search, it was shown to work on several well known optimization problems. In the following year, there were further results showing success on several real world engineering optimization problems ["Engineering optimisation by cuckoo search," Int. J. Mathematical Modelling and Numerical Optimisation, vol. 1, no. 4, pp. 330-343, May 2010.]. However, the nature of these problems is similar in that they all exist in a numerical search space. This type of problem is especially suited to Levy flights because it's easy to conceptualize changing a number by a small or large amount with respect to the Levy distribution. There has been no exploration of moving this technique to areas where the mapping isn't nearly as straightforward. However, as a possible area of future work, the traveling salesman problem (TSP) was suggested.

TSP, like Mario, represents an attempt to optimize a sequence of distinct states given some constraint. In TSP, each state is a city and the goal is to optimize the shortest path that visits each city once. In the case of Mario, the states are as described in previous section, and the goal is to maximize the distance Mario travels toward the end of the level.

We propose a method for applying a similar transformation to problems with state based solutions based on the Levy distribution. We apply it first to the simpler TSP and then fully expand it to the Mario domain (though the situations are similar).

### Bridging the Gap Between States and Numbers

Levy flights work by changing the solution in a specific way. When this solution is a number, it's a simple process of producing a value from the Levy distribution and modifying the solution directly. In contrast, the TSP, consisting of a sequence of states, cannot currently be modified using the Levy flight method. By creating a mapping between numbers and state sequences, we enable an intuitive method for applying Levy values to the TSP problem. Indeed, such a system would apply to any problem which can be visualized in this manner. One such relationship is the representation of a number as a sequence of states, where each state corresponds to a bit in the number. Large and small changes to this sequence are expressed as specific alterations of each 'state.' The TSP can be viewed in the same way (Figure 7).

The figure 7 demonstrates small and large changes to a number and a solution to a TSP. Both the number and the solution are represented as state sequences. For the number, magnitude of change is mostly dependant on the significance of the bit a state encodes as its modified. For the TSP solution, the frequency of state modifications is most important.

Note that the concept of 'large' and 'small' is expressed differently for the two examples. It is expected that a majority of problems will express such differences in magnitude in domain specific ways. This relationship clearly demonstrates our goal in changing a TSP solution. In addition, however, a method must be created for using a number to produce the required change.

### Recasting Numbers as Changes

Now that we have formulated a method for representing arbitrary changes to state sequences, we need to create a process for effecting such changes. Fortunately, there are numerous ways to take any number (from a Levy distribution perhaps) and use it as a parameter to change nearly anything. For example, one can treat the number as a probability. For each city in a TSP, with Levy probability p, exchange with a random city. Usually, the probability will be low resulting in only a few changes. Rarely, the entire solution will change. This is the wanted behavior. A more constrained example might be to treat the number from the Levy distribution as a fraction of the total number states. Using that fraction, randomly change that many of the most recent states. This is especially useful if the algorithm develops solutions in such a way that early states are already optimal and thus, the tail of the chain is the interesting part of exploration. Note that while we're stating that selected states are changed randomly, there is certainly no requirement for that. Many optimization problems will want to use heuristics for choosing the new states.

### TSP to Mario

The application of the algorithm to TSP was general enough that its application to Mario follows almost immediately. Using the state representation described above, it should be possible to describe a method similar to the one described in the last section which produces Levy mutations in our Mario solutions. However, with TSP, each state was known and the goal was to find the best path through all of them. Mario has so many states that enumeration is impossible. Moreover, the set of constraints which restricts transitions from state to state is unknown as well. The Mario problem provides an unknown number of states and the transitions between them are mostly unknown as well.

However, as shown in previous section, one can easily reason about the small subset of states and transitions which make up a solution. Every state has an associated action which leads to the next state. It is this sequence of states we will modify using the Levy distribution.

### Applying the Levy Mutation:

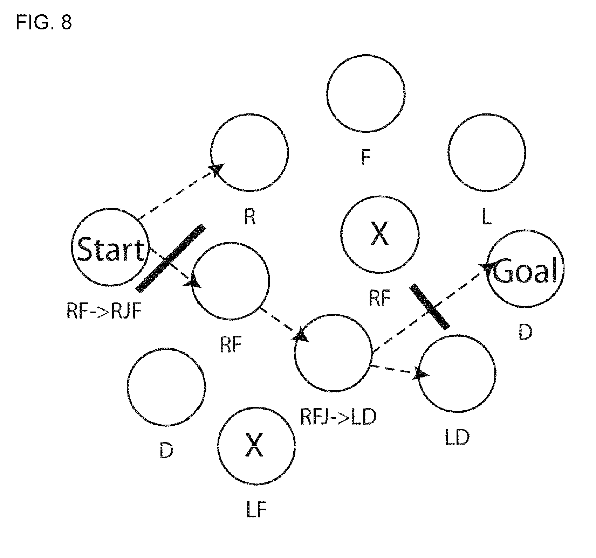

When the Levy probability indicates that a state should be changed, there is no way to choose a completely random state, as we could with the TSP, because the set of states are unknown. For any known state, it is most likely that the connection to the current state can't be easily determined. Thus, instead, a new action is randomly (or heuristically) generated. Thus, the Levy mutation can be applied as follows. First, we use a value from the Levy distribution as the probability that we'll change any one state-action pair in the solution. Using said probability we visit every state-action pair and change its action as appropriate. Interestingly, a changed state's position in the sequence is not changed at all, but its link to *every* state which followed in the sequence is now severed (Figure 8).

Figure 8 depicts an example of a possible Levy mutation applied to figure 6. Severed links are shown with black rectangles. The old actions use an arrow to point to the new ones. Note that even though the first mutation removed the relevance of subsequent states, one was also mutated. This could play a role if future mutations return it to the state sequence.

This means that the mutation will be much more severe than what was seen in TSP. Additionally, like in the number example in Figure 7, the magnitude of the change is dependent mostly on the position of the changed states (early states in the sequence have the most impact).

### NARROWING THE SEARCH SPACE WITH SOFTMAX

With what has been presented to now, the evolved AI is fairly unsuccessful. That is, with random initialization of states, the AI converges very slowly. In fact, given the maximum number of simulation steps in the Mario AI competition, it never reaches a reasonable solution. The final results can be seen in II. While the performance is dissapointing, it's not unexpected. Finding solutions in such a large problem space is essentially impossible and the given constraints of the contest. Softmax is a policy used in Q-Learning which avoids a key drawback of greedy policies: terrible states are just as likely to be chosen as good ones. Instead, a softmax policy assigns a certain probability to each transition based on the various Q values. The algorithm presented here differs from Q-Learning, however, as there are no Q values upon which to base such probabilities for our transitions to new states. The concept embodied by softmax is similar enough though, that we use the term to describe the heuristics which follow. As the AI presented in this work evolves over the course of a Mario level, it is constantly choosing actions which advance it to the next state. During these choices, by choosing better actions to worse ones using some hand tuned heuristic, the essence of the softmax policy is realized. First, we'll look at applying a general heuristic to our algorithm. Second, we'll look at the specific heuristics we chose for optimizing Mario.

### Applying a Heuristic

As explained, it is possible to apply a heuristic during initialization and also as a part of the Levy mutation process. In each case, we're taking a state and deciding which transition action should be made at this state. This decides what the next state will be. Generally, in algorithms with small search space, these decisions are made randomly. Instead, with probability p, some specific action is taken according to some predetermined heuristic. Otherwise, a random action will be chosen. An additional difference from the original softmax policy arises: the heuristic is not related to the current state.

No matter what the current state, the probabilities remain the same in the present work. Context specific probabilities can be imagined but at the same time every additional probability increases the complexity of the algorithm, at the same time, approaching a hard coded rule based system.

### Heuristic Choice

The choice of the primary heuristic was chosen after looking at the results of the Mario 2009 competition which showed an interesting result besides the dominance of the A* algorithm. Specifically, most evolutionary algorithms lost to the naive agent which was included with the MarioAI Benchmark system. That agent only did 2 things: 1) run forward; 2) jump. This makes sense given that most evolutionary algorithms seemed to be exploring the search space uniformly. Our own work in that competition spent many seconds of levels trying to run to the left even at the very beginning of the stage. In contrast, the goal of Mario is to reach the goal posts at the far right of the level. Already, the naive agent is effectively moving through the problem space even if it doesn't care about anything happening at all. The fundamental skill of running right has been shown to appear even in basic neural network Mario AI.

The first heuristic is simple then: with probability *p* run forward, and jump. Otherwise, choose an action randomly. Just this change made the seemingly impossible task of passing the easiest level trivial. The value for *p* is an important but fairly insensitive parameter. Experimentation found that .6 was too low and convergence was too slow for competition. On the other hand anything above .9 led to the AI converging too quickly and getting stuck in local optima. However, this single minded heuristic isn't how players play, even if it is a large part of their action space. Exploring harder and harder stages in Mario led to a realization: sometimes, Mario needs to move left. Specifically, in a situation where hidden blocks are required to advance in the level, Mario will most likely run past them and then get stuck in a dead end. Of course, with enough time the stochastic element should lead Mario to the correct path, but the rate is slow enough that this has never been observed. A human player will see a problem and move left to explore spaces already explored.

One solution would be to add special code to detect dead ends and move back to search for hidden blocks, etc. This solution is fair, and such a combination of learning techniques and hand coded algorithms can be successful. However, for the present work, it was more interesting to see if there is a heuristic which would lead to the desired behavior. The previous heuristic cannot be replaced with one which moves left for obvious reasons. Thus, the solution is simple: create a compound heuristic which allows exploring left for some probability *p'*. This final heuristic ends up being: 1) with probability *p*, run forward and jump; 2) with probability *p'*, run left and jump, 3) otherwise, choose an action randomly. The values of the heuristics in this case rely on each other. Before, we let *p* vary quite a lot, but in this instance experimentation shows that *p* should be closer to .9 than .6. *p'* can vary between .6 and 8 depending on the level. The reason *p* needs to be higher than before is because now the addition of moving left hinders general progress through a level. In order to counteract this, we move right more often which allows for good solutions.

**TABLE I**

| A TABLE SHOWING A COMPARISON BETWEEN THE CUCKOO SEARCH ALGORITHM PRESENTED IN THIS PAPER AND A GENETIC ALGORITHM. BOTH ARE USING THE SOFTMAX HEURISTIC EXPLAINED IN SECTION VI. LD IS LEVEL DIFFICULTY. DEFAULT REFERS TO A LEVEL WITH NO ADDED PARAMETERS. UG REFERS TO AN UNDERGROUND LEVEL. HB IS A LEVEL WITH HIDDEN BLOCKS. BOTH IS A LEVEL THAT IS UNDERGROUND AND CONTAINS HIDDEN BLOCKS. | | | | | |
|---|---|---|---|---|---|
| Agent Type | LD | Default | UG | HB | BOTH |
| Cuckoo | 3 | 9177.4 | 3340.5 | 5985.5 | 7566.6 |
| | 10 | 8054.9 | 2870.7 | 3951.9 | 2544.9 |
| | 20 | 8010 | 2955.2 | 5094.04 | 2733.1 |
| Genetic | 3 | 9392.8 | 33b3,2 | 5932.4 | 7531.2 |
| | 10 | 8098.7 | 2850.3 | 3413.2 | 2544.2 |
| | 20 | 7710.6 | 2906.9 | 5525.8 | 2758.6 |

### RESULTS

The AI described in this paper was tested on a set of levels of varying types and difficulties using an arbitrarily chosen seed to generate the levels. The levels were tested with and without the softmax heuristic. Additionally, a generic genetic algorithm was used to evolve a comparison agent on the same levels. The results of the random heuristic agents can be seen in table I, while the softmax heuristic results are in table II.

### Softmax Results

The first thing to notice is that counter to previous assumptions, the genetic algorithm performs on par with cuckoo search. Generally, both perform fast and well on easy levels which are to be expected since in these are the cases that the naive agent mentioned could solve without the help of any learning at all.

In the harder levels, two things can happen: 1) The level is impossible and both bots converge to a mediocre answer nearly immediately. 2) The level is possible and both will converge to an answer (possibly not optimal) or one will be slightly better than the other. Given the difference in the two algorithms it seems almost certain that the use of the heuristic drives their behavior a huge amount. The hope was that in these cases the supposed faster search capabilities of the Levy distribution would cause the cuckoo agent to solve tricky areas at a higher rate than the generic genetic algorithm. This appears not to be the case. Given the difference in the two algorithms it seems almost certain that the use of the heuristic drives their behavior a huge amount. The hope was that in these cases the supposed faster search capabilities of the Levy distribution would cause the cuckoo agent to solve tricky areas at a higher rate than the generic genetic algorithm. This appears not to be the case.

**TABLE II**

| A TABLE SHOWING THE SAME COMPARISON AS IN TABLE I WITHOUT THE SOFTMAX HEURISTIC APPLIED. THAT IS, THE SOLUTIONS ARE RANDOMLY INITIALIZED. | | | | | |
|---|---|---|---|---|---|
| Agent Type | LD | Default | UG | HB | BOTH |
| Cuckoo | 3 | 1001.2 | 2238.1 | 857.7 | 1827.6 |
| | 10 | 2204.2 | 2220.7 | 1921.9 | 2071.3 |
| | 20 | 3187.7 | 1979.9 | 2216.5 | 2185.4 |
| Genetic | 3 | 973.9 | 2207.2 | 863.7 | 2179.4 |
| | 10 | 2162.9 | 2256.7 | 1920.9 | 2038.8 |
| | 20 | 3276.1 | 1914.2 | 2281.3 | 2196.2 |

### Random Results

The results for both AI were much worse without the use of a heuristic. This shows that regardless of the algorithm used, it can benefit from the use of softmax heuristics to focus the search of the problem space. Again, the expectation is that the fast searching of cuckoo with Levy should give it an advantage but this is not seen in the results. One possible explanation of this is that the search space is so large that a uniform search of it will essentially always fail, even if the cuckoo agent is searching at a relatively higher speed. Another explanation is simply that even though cuckoo search requires less parameter tuning, they are tuned suboptimally leading to this undesired behavior. In contrast, the genetic algorithm could be better tuned than average.

The area of Mario AI is extremely wide open and the present work has certainly not 'solved' it. Several extensions from the present work follow.

### Examine Levy Mutation

As mentioned, there are many ways to use a value generated by the Levy distribution to modify the state space. Exploration of different choices in this regard might shed light on the lackluster performance in certain levels.

### Finding the Perfect Heuristic

Most interesting would be a heuristic which maintained pressure to progress but didn't stifle exploration as much.

### Generalizing the AI

The current AI can only reliably work on levels for which it has been trained. This is useful for the Learning Track of the competition as well as real world game systems but not as interesting in the sense of wanting a "Mario Playing AI." Figuring out if such evolutionary algorithms can compete with the likes of A* is interesting work.

### CONCLUSION

In this work, we have demonstrated an extension to the Cuckoo Search algorithm for use with Super Mario Bros. We have also added a softmax heuristic to allow for fast convergence to reasonable solutions. The use of cuckoo search with Levy flight performs comparably with a generic genetic algorithm. However, there was no indication of benefit gained from the faster search capabilities of the cuckoo algorithm.

The use of the softmax heuristic had dramatic effect on the performance of the AI agent, allowing it to regularly clear the hardest levels.
The use of Cuckoo Search with Levy flights is a reasonable choice for an evolutionary algorithm which plays Mario.
Furthermore, it is recommended that any such algorithm use a softmax heuristic to focus the search to reasonable areas.

### [Explanation of Element Numeral]

- 100: game apparatus
- 110: a mapping means
- 111 a: solutions search means
- 112: a levy flight means
- 113: a softmax means

## Claims

1. A program for artificial intelligence for platform games which makes a computer to perform steps of:
initializing solutions, each of solutions containing one or a plurality of states of a character;
selecting an initial solution and a new solution, the initial solution being nothing or being selected from the initialized solutions and the new solution being selected from the initialized solutions;
comparing fitness score of the initial solution and fitness score of the new solution;
generating a current solution, the current solution being the initial solution when the fitness score of the initial solution is the same as or higher than that of the new solution and the current solution being the new solution when the fitness score of the new solution is higher than that of the initial solution;
repeating a step of generating another new solution and a step of comparing fitness scores of the current solution and the another new solution to generate a revised current solution;
comparing fitness scores of solutions, including the initial solution and generated solutions, such that the solution that has the worst score is replaced with predetermined probability with a newly selected solution selected at random from the candidates of solution.

2. The program in accordance with claim 1, wherein one state is linked with another state via one action of the character.

3. The program in accordance with claim 2, wherein the actions include "jump", "move left" and "move right".

4. The program in accordance with claim 1, wherein the random selections are performed with Levy flight algorism using numbers that correspond to the states.

5. The program in accordance with claim 1, wherein the initializing solutions are prepared by Softmax engine.
